# EUROPÄISCHE PATENTANMELDUNG

(11) **EP 1 388 784 A1**
(43) Veröffentlichungstag der Anmeldung: **11.02.2004**
(21) Anmeldenummer: 02017623.6
(22) Anmeldetag: 05.08.2002
(51) Int. Cl.: G06F 9/44

(54) **Verfahren und Vorrichtung zur Erweiterung von Software- und Hardwaremodellen um berechnete Daten**

(71) Anmelder: The Rationalizer Intelligent Software AG, 14167 Berlin (DE)
(72) Erfinder: Krug, Holger, 14167 Berlin (DE)

(57) **Zusammenfassung**

Die Erfindung betrifft ein Verfahren, ein softwaregesteuertes Gerät und eine Software zur Erweiterung von Modellen für Software oder Hardware, die sich dadurch auszeichnen, dass die Erweiterungen neben neuen Eigenschaften von und Beziehungen zwischen Modellelementen auch neue Typen von Modellelementen, neue Modellelemente dieser Typen und deren Eigenschaften und Beziehungen mit anderen Modellelementen einführen.

## Beschreibung

### 1Technisches Gebiet

Die Erfindung gehört zum Gebiet der Verfahren und Vorrichtungen zur Software- und Hardwareerstellung, genauer in das Gebiet der Modellierung von Software und Hardware und der Vorbereitung der Modelle zur Generierung der Software und von Teilen der Software, zur Steuerung der Produktion der Hardware oder deren Prototypen auf Grundlage der Modelldaten und davon abgeleiteter weiterer Daten. Die Erfindung hat außerdem Auswirkung auf das Gebiet der automatischen Kosten- und Aufwandsermittlung für die Software- und Hardwareentwicklung und -produktion, insofern diese Kosten- und Aufwandsermittlung auf Grundlage von Modellen der Software und Hardware geschehen kann und dazu die Berechnung weiterer Daten aus den Modellen notwendig ist.

### 2Stand der Technik

Der Stand der Technik wird gebildet durch die am 25.07.02 beim Europäischen Patentamt eingereichtete und dort unter der Anmeldenummer 02016349.9 angenommene Patentanmeldung. Sie beschreibt ein Verfahren zur Erzeugung von Software, bei dem
1. Modelle erstellt werden, die Instanzen von Meta-Modellen sind,
2. für die Meta-Modelle Erweiterungen durch berechnete Eigenschaften und Beziehungen zwischen Modellelementen erstellt werden, die auf die Modelle angewandt werden können,
3. durch Anwendung von Code-Schablonen, die auf die in den erweiterten Modellen enthaltenen, teilweise nutzerdefinierten, teilweise berechneten Daten zugreifen, Code generiert wird.

Die vorliegende Erfindung besteht in einer Verbesserung von Schritt 2, durch die nicht nur berechnete Eigenschaften und Beziehungen den Modellen hinzugefügt werden können, sondern auch Modellelemente.

### 3Der Erfindung zugrundeliegerides Problem

Die Erweiterung von Modellen für Software oder Hardware um berechnete Daten ist notwendig, um die Modelle auf effiziente Weise in automatisierten oder halb-automatischen Umgebungen einsetzen zu können. In der Anmeldung EPA 02016349.9 wurde das am Beispiel der automatischen Generierung von Software-Code aus Software-Modellen beschrieben.

Das dort beschriebende Verfahren und die dort beschriebenen Vorrichtungen haben aber eine Einschränkung, die sich in bestimmten, noch zu beschreibenden Anwendungsfällen nachteilig auswirkt. Die Einschränkung besteht darin, dass Modelle im allgemeinen aus Entitäten dreier verschiedener Arten bestehen oder zumindest derartige Entitäten enthalten, nämlich:
1. Modellelemente
2. Eigenschaften von Modellelementen
3. Beziehungen zwischen Modellelementen

Demhingegen lassen die in EPA 02016349.9 beschriebenen Modellerweiterungen nur die Hinzufügung berechneter Eigenschaften und Beziehungen zu, nicht aber die Hinzufügung berechneter Modellelemente.

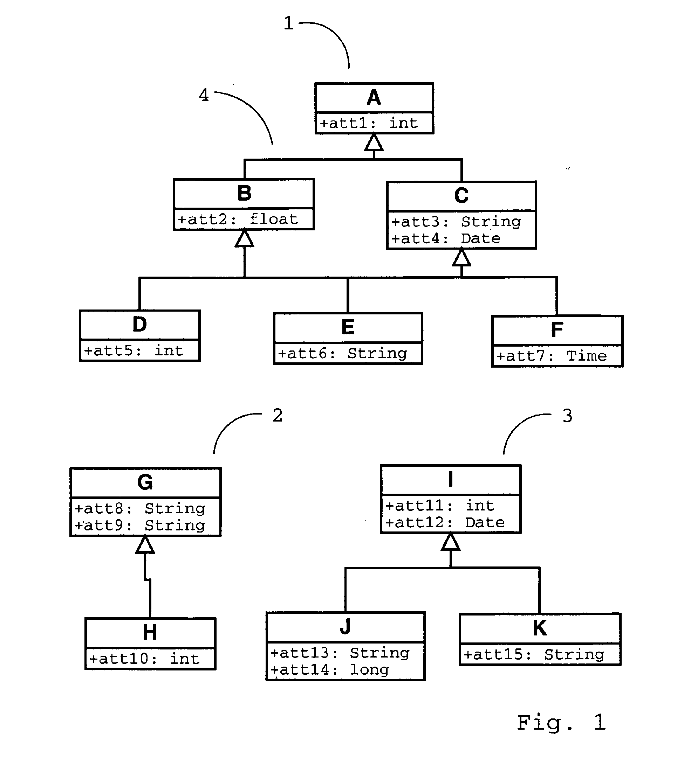

Ein Beispiel möge deutlich machen, dass die Hinzufügung berechneter Modellelemente von bestimmten Anwendungsfällen gefordert wird. **Fig. 1** zeigt einen Ausschnitt aus einem Modell gemäß der Unified Modeling Language (UML, die Spezifikation der UML findet sich im Internet unter http://www.omg.org/uml/). Der Ausschnitt zeigt elf Klassen ***A-K*** mit ihren jeweiligen Eigenschaften ***att1-att15.*** Zu den Attributen sind jeweils die Datentypen angegeben, nämlich **int, *float, String,*** *Date, Time* oder ***long.*** Zwischen den Klassen bestehen Vererbungsbeziehungen, die jeweils durch Pfeile angedeutet sind, deren Spitze auf die Oberklasse zeigt und deren anderes Ende an der Unterklasse anliegt. So stellt der Pfeil **(4)** eine Vererbungsbeziehung dar, in der ***A*** Oberklasse und ***B*** Unterklasse ist. Die Vererbungsbeziehung besagt in der UML unter anderem, dass Instanzen der Unterklasse alle Eigenschaften der Oberklasse haben. So hat also jede Instanz von ***B*** neben der Eigenschaft ***att2*** vom Typ ***float*** zusätzlich die Eigenschaft ***att*1** vom Typ ***int,*** die in der Klasse **A** definiert ist.

Durch die Vererbungsbeziehung werden in dem Beispiel von **Fig. 1** drei unabhängige Klassenhierarchien **(1), (2)** und **(3)** definiert, die jeweils aus den Klassen ***A-F*** bzw. ***G-H*** bzw. ***I-K*** bestehen.

Die Anwendungsaufgabe besteht darin, einen Generator nach dem in EPA 02016349.9 dargestellten Verfahren zu erstellen, der Code für eine relationale Datenbank generiert. Der generierte Code soll eine Tabellenstruktur in der Datenbank festlegen, die es erlaubt, Instanzen der Klassen von **Fig. 1** mit allen ihren Eigenschaften aufzunehmen.

Für die Wiedergabe einer Klassenhierarchie in einer relationalen Datenbank gibt es drei grundsätzliche Möglichkeiten:
1. Für jede Klasse wird eine Tabelle angelegt, die nur die Eigenschaften, die in dieser Klasse definiert sind, als Spalten enthält. Als Zeilen enthält die Tabelle Einträge für jede Instanz der Klasse und alle ihrer Unterklassen.
2. Für jede Klasse wird eine Tabelle angelegt, die alle Eigenschaften, die in dieser Klasse und allen ihren Oberklassen definiert ist, als Spalten enthält. Als Zeilen enthält die Tabelle lediglich Einträge für jede Instanz der Klasse.
3. Es wird für jede Klassenhierarchie nur eine Tabelle angelegt, die alle Eigenschaften, die in der gesamten Hierarchie definiert sind, als Spalten enthält. Als Zeilen enthält die Tabelle Einträge für jede Instanz einer der Klassen der Hierarchie.

Neben den drei genannten Formen der Wiedergabe der Klassenhierarchie in eine relationalen Datenbank sind auch Mischformen möglich. Die Generierungsaufgabe besteht darin, für jede in einem Modell enthaltene Klassenhierarchie, wie z.B. für die drei Hierarchien **(1), (2)** und **(3)** aus **Fig. 1** unter Performance-Gesichtspunkten
1. die Tabellenstruktur der Datenbank festzulegen,
2. modelldefinierte Zugriffe auf Objekte und deren Eigenschaften in Datenbankabfragen zu übersetzen.

Um diese Generierungsaufgabe mit dem Verfahren nach EPA 02016349.9 komfortabel durchführen zu können, muss eine Klassenhierarchie als eigenständiges Objekt, das heisst als eigenständiges Modellelement eines erweiterten Modells, angesprochen werden können.

Weiterhin müssen für jede Klassenhierarchie bestimmte Eigenschaften abgefragt werden können, wie z.B.
- die Anzahl der Klassen in der Hierarchie,
- die Summe der Anzahlen der Attribute aller Klassen der Hierarchie,
- die durchschnittliche Anzahl der Attribute pro Klasse in der Hierarchie.

Die in dem Beispiel verwendete Modellierungssprache, die UML, bietet aber weder die Möglichkeit, Klassenhierarchien als Modellelemente ansprechen zu können, noch derartige Eigenschaften abfragen zu können. Um also in dem vorgestellten Beispiel die Codegenerierung nach dem Vorbild von EPA 02016349.9 durchführen zu können, muss es zusätzlich notwendig sein, in Modellerweiterungen neue Typen von Modellelementen einzuführen, deren Instanzen in einem konkretem Modell inklusive der Eigenschaften dieser Instanzen berechnet werden.

### 4Die Erfindung

Die Erfindung besteht in einem Verfahren zur Berechnung von und zum Zugriff auf aus Modellen für Software oder Hardware abgeleiteten Daten und in einem Gerät und einer Software, die dieses Verfahren realisieren. Die Fortschritt gegenüber EPA 02016349.9 besteht darin, dass zu den zusätzlichen, aus dem Modell ableitbaren Daten neben Eigenschaften von und Beziehungen zwischen Modellelementen auch Modellelemente selbst gehören.

Das Verfahren zur Definition der Modellerweiterung um neue, berechnete Modellelemente, die Instanzen eines in der Erweiterung definierten Typen sind, besteht in folgenden Schritten:
1. Der Modellierungssprache wird eine neuer Modellelementtyp hinzugefügt, dessen Instanzen aus dem Modell berechnet werden sollen. Diesem wird ein Name gegeben. Zunächst ist hiermit weder definiert, welche Instanzen der neue Modellelementtyp in einem konkreten Modell hat, noch welche Eigenschaften diese Instanzen haben und welche Beziehungen sie eingehen.
2. Für den neuen Modellelementtyp werden Eigenschaften definiert, wobei zu jeder Eigenschaft zumindest der Name und der Type der Eigenschaft angegeben wird. Es können hier sowohl Eigenschaften angegeben werden, die sich auf den neuen Modellelementtyp selbst beziehen, als auch Eigenschaften von dessen Instanzen.
3. Für den neuen Modellelementtyp werden Beziehungen definiert, in denen Instanzen des neuen Modellelementtyps zu Instanzen desselben oder von anderen Modellelementtypen stehen können. Zu jeder Beziehung werden die betroffenen Modellelementtypen angegeben. Zumindest zwei Modellelementtypen müssen hierbei angegeben werden, die aber auch identisch sein können. Außerdem können die Beziehungen durch weitere Daten charakterisiert werden wie: der Name der Beziehung, der Name einer in die Beziehung involvierten Instanz, wenn sie durch die Beziehung betrachtet wird (= die Name der Rolle, die eine Instanz in der Beziehung spielen kann), die Anzahl der anderen Instanzen, auf die eine Instanz durch die Beziehung bezogen sein kann.
4. Für den neuen Modellelementtypen wird eine Berechnungsvorschrift angegeben, wie die Menge seiner Instanzen aus den restlichen Daten eines Modells berechnet werden kann. Ergebnis dieser Berechnung kann eine beliebige Menge von Daten sein. Jedes Datum dieser Menge repräsentiert eine Instanz des neuen Modellelementtypen, das heisst ein berechnetes Modellelement.
5. Für jede Eigenschaft des neuen Modellelementtypen wird eine Berechnungsvorschrift für den Wert der Eigenschaft angegeben, in der auf die Menge aller Instanzen des neuen Modellelementtypen zugegriffen werden kann. Der Ergebnistyp der Berechnungsvorschrift muss mit dem für die Eigenschaft deklarierten Typen typkompatibel sein.
6. Für jede Eigenschaft von Instanzen des neuen Modellelementtypen wird eine Berechnungsvorschrift für den Wert der Eigenschaft angegeben, in der auf das diese Instanz gemäß Schritt 4. repräsentierende Datum zugegriffen werden kann.
7. Für jede Beziehung in der Instanzen des neuen Modellelementtypen involviert sein können, wird eine Berechnungsvorschrift angegeben, die als Eingabe Instanzen der beteiligten Modellelementtypen erhält und deren Ergebniswert besagt, ob diese Instanzen in der Beziehung stehen oder nicht.

Die Verfahrensschritte 2-7 können auch in anderer Reihenfolge oder parallel durchgeführt werden. Es können auch einige der Verfahrensschritte unterbleiben, wenn die durch sie hingefügbaren berechneten Daten nicht benötigt werden. In Schritt 2 kann die Angabe des Typs der Eigenschaft unterbleiben, wenn dieser Typ sich aus den in Schritt 5 bzw. 6 angegebenen Berechnungsvorschriften ableiten lässt.

Anspruch 4 ergänzt das Verfahren in der Weise, das eine oder mehrere derartige Modellerweiterungen in einer Bibliothek zusammengefasst werden. Im Rahmen dieser Patentanmeldung werden derartige Bibliotheken von Modellerweiterungen Erweiterungsschichten genannt.

Anspruch 8 ergänzt das Verfahren in der Weise, dass ein Gerät verwendet wird, das den Zugriff auf die Daten des erweiterten Modelles, d.h. sowohl die ursprünglichen Modelldaten als auch die in den Modellerweiterungen enthaltenen zusätzlichen berechneten Daten, in solcher Weise ermöglicht, dass es für den zugreifenden Nutzer, das zugreifende Gerät oder die zugreifende Software keinen Unterschied macht, ob ursprüngliche Modelldaten oder berechnete, in den Modellerweiterungen definierte Daten abgefragt werden.

Zirkuläre Definitionen gemäß Anspruch 11 sind Definitionen der folgenden Art:
**1. let *NewType1.allInstances() = NewType2.allInstances()***
   ***let NewType2.allInstances() = NewType1.allInstances()***
**2. *let a = b * 2***
   ***let b = a + 1***
***3. let x = x * 2***

Das erste Beispiel stellt zirkuläre Definitionen zweier Modellelementtypen dar, das zweite und dritte die zirkuläre Definition von Eigenschaften. Der Zirkel kann bei der Ausführung der Berechnungsvorschriften erkannt werden, wenn zu Beginn der Ausführung einer jeden Berechnungsvorschrift ein die zu berechnende Entität (Eigenschaft, Beziehung oder Modellelementtyp) eindeutig charakterisierendes Datum auf einen Stapel geschoben wird, das nach dem Ende der Ausführung der Berechnungsvorschrift wieder von dort entfernt wird. Immer dann wenn der Wert einer Entität berechnet werden soll, ist zunächst zu prüfen, ob das die Entität charakterisierende Datum bereits auf dem Stapel vorhanden ist. Wenn ja, wurde eine zirkuläre Definition entdeckt, die dem Nutzer als Fehler berichtet werden muss, wenn nein, kann mit der Berechnung fortgefahren werden.

### 5Gewerbliche Anwendbarkeit

Die gewerbliche Anwendbarkeit des erfindungsgemäßen Verfahrens, des erfindungsgemäßen softwaregesteuerten Gerätes und der erfindungsgemäßen Software besteht in der Verwendbarkeit bei der gewerblichen Herstellung, Pflege und Wartung von Software, von softwaregesteuerten Systemen und von Hardware. Außerdem sind Anwendungen in der Vorabkalkulation von Software und Hardware und bei der Konfiguration von Software möglich. Erstere dadurch, dass zu den in einem erweiterten Modell enthaltenen berechneten Daten auch Kalkulationsdaten gehören können, letztere dadurch, dass mit dem erfindungsgemäßen Verfahrens, dem erfindungsgemäßen softwaregesteuerten Gerätes und der erfindungsgemäßen Software nicht nur Software und Hardware, sondern auch Softwarekonfigurationen z.B. in Form von aus Modellen zu generierenden Konfigurationsdateien hergestellt werden können.

### 6Vorteilhafte Wirkungen der Erfindung

Der Hauptvorteil der Erfindung gegenüber dem Stand der Technik, d.h. gegenüber EPA 02016349.9, besteht darin, dass die Ausdrucksfähigkeit von Modellerweiterungen dadurch wesentlich verbessert wird, dass nicht nur Eigenschaften und Beziehungen, sondern auch Modellelementtypen und deren Instanzen Teil der Modellerweiterung sein können. Dies ist in demselben Sinne vorteilhaft, wie die in EPA 02016349.9 in den Stand der Technik eingeführten Modellerweiterungen überhaupt vorteilhaft sind. Modellerweiterungen gliedern den Prozess der
1. Erstellung von Modellen
2. Berechnung von Daten aus Modellen
3. Verwendung der Modelle und der berechneten Daten z.B. zur Codegenerierung
in klarer, arbeitsteiliger Weise, wodurch erweiterte Anwendungsfelder für modellbasiertes Arbeiten auf dem Gebiet der Software- und Hardwareherstellung, -pflege und -wartung erschlossen werden. Die Vorteile des modellbasierten Arbeitens selbst, dessen Anwendbarkeit durch die Erfindung erweitert wird, liegen darin, dass eine Trennung der im Modell dargestellten Kerneigenschaften einer Software oder Hardware von Details der Implementierung vorgenommen wird, wodurch die Erstellung, Erweiterung und Pflege bzw. Wartung der Software bzw. Hardware vereinfacht wird.

### 7Ausführungsbeispiel

Ein Ausführungsbeispiel der Erfindung im Sinne der Ansprüche 3, 5, 8 und 12 ist nachstehend unter Bezugnahme auf die zugehörigen Zeichnungen näher erläutert. Es zeigt die Erstellung einer Erweiterung für die Unified Modeling Language (UML), durch die Klassenhierarchien als eigenständige Modellelemente mit eigenen Eigenschaften und Beziehungen in das Modell eingeführt werden. Es zeigt ferner die Verwendung dieser Erweiterung. Zur Motivation des Beispiels wird auf Abschnitt 3 verwiesen.

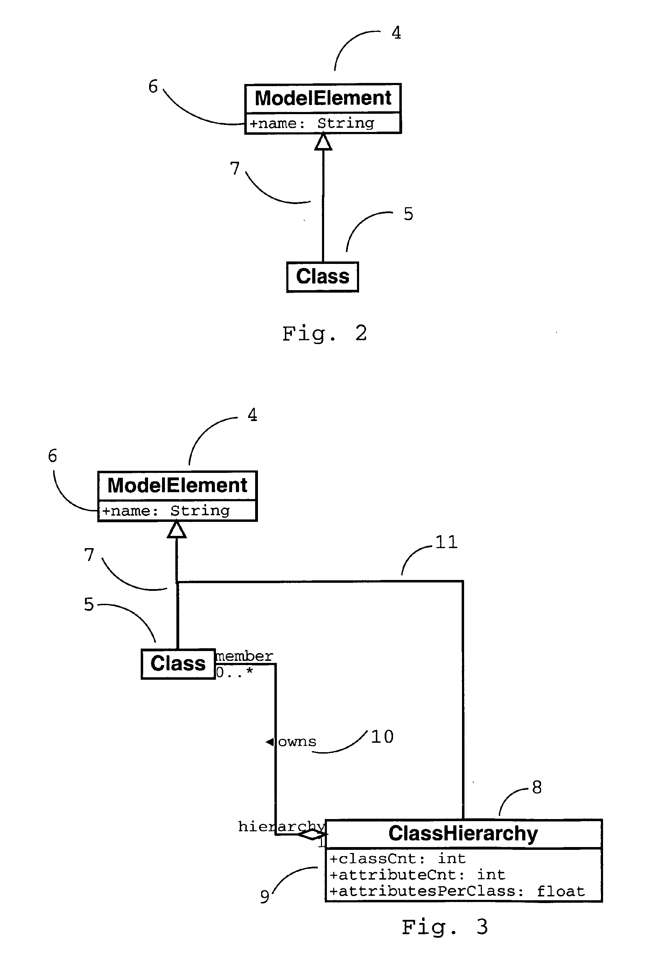

**Fig. 2** zeigt einen stark vereinfachten, für das vorliegende Beispiel aber ausreichenden Ausschnitt aus dem Meta-Model der UML. Das vollständige Meta-Modell ist in der Spezifikation der UML enthalten (im Internet unter http://www.omg.org/uml/). **(4)** ist der Basis-Typ für alle anderen Modellelementtypen. **(5)** ist der Modellelementtyp ***Class,*** von dem ***A-K*** aus **Fig. 1** Instanzen sind. **(6)** besagt, dass jedes Modelelement eines UML-Modelles einen Namen haben muss. Der Generalisierungspfeil **(7)** besagt, dass jede Instanz von ***Class*** auch Instanz *von* ***ModelElement*** ist.

**Fig. 2** gibt zugleich den Anblick wieder, den ein Gerät im Sinne der Ansprüche 7-11 bzw. eine auf einem Computer installierte Software im Sinne des Anspruches 12 dem Nutzer auf den entsprechenden Ausschnitt des Meta-Modells der UML gibt, bevor dieser irgendeine Erweiterung des Meta-Modells definiert hat. Sinnvollerweise stellt das Gerät bzw. die Software die dargestellten Elemente des UML Meta-Modells in grauer Farbe dar, oder zeigt dem Anwender in anderer Form, dass es sich um Teile des Meta-Modells handelt und nicht der Modellerweiterung, dass diese Teile also bei der Erstellung der Modellerweiterung nicht geändert werden können. Das Gerät bzw. die Software erlaubt lediglich die Hinzufügung neuer Eigenschaften, Beziehungen und Modellelementtypen.

**Fig. 3** gibt den Anblick wieder, den das Gerät bzw. die Software nach Durchführung der Verfahrensschritte 1-3 (siehe oben Seite 3) bietet. Der Nutzer hat einen neuen Modelelementtype ***ClassHierarchy* (8)** hinzugefügt, dessen Instanzen Klassenhierarchien repräsentieren sollen. Mittels des Generalisierungspfeils **(11)** hat der Nutzer festgelegt, dass jede Klassenhierarchie auch ein Modellelement ist. Der Nutzer hat ferner 3 Eigenschaften **(9)** für die Instanzen von ***ClassHierarchy* (8)** definiert, nämlich:
1. ***classCnt,*** die Anzahl der Klassen in der Hierarchie, vom Typ ***int*** (ganze Zahl)
2. ***attributeCnt,*** die Summe der Anzahlen der Attribute aller Klassen der Hierarchie, vom Typ ***int*** (ganze Zahl)
3. ***attributesPerClass,*** die durchschnittliche Anzahl der Attribute pro Klasse in der Hierarchie, vom Type ***float*** (Gleitkommazahl)

Zusätzlich hat der Nutzer eine Beziehung ***owns* (10)** zwischen Instanzen von ***ClassHierarchy*** und Instanzen von ***Class*** definiert. Die beabsichtigte Bedeutung ist, dass eine Klassenhierarchie und eine Klasse genau dann in der Beziehung ***owns* (10)** stehen, wenn die Klasse Element der Hierarchie ist. Die Angabe der Multiplizitäten ***1*** bzw. ***0*..** * besagt, dass jede Klasse Element genau einer Klassenhierarchie ist und das jede Klassenhierarchie eine unbestimmte Anzahl von Klassen enthält.

Das erfindungsgemäße Gerät bzw. die erfindungsgemäße Software unterscheidet sinnvollerweise die hinzugefügten Elemente der Erweiterung farblich oder auf andere Weise von den Elementen des ursprünglichen Meta-Modells. Der Grund ist, dass erstere vom Nutzer weiter bearbeitet werden können, während letztere nicht vom Nutzer bearbeitet werden können.

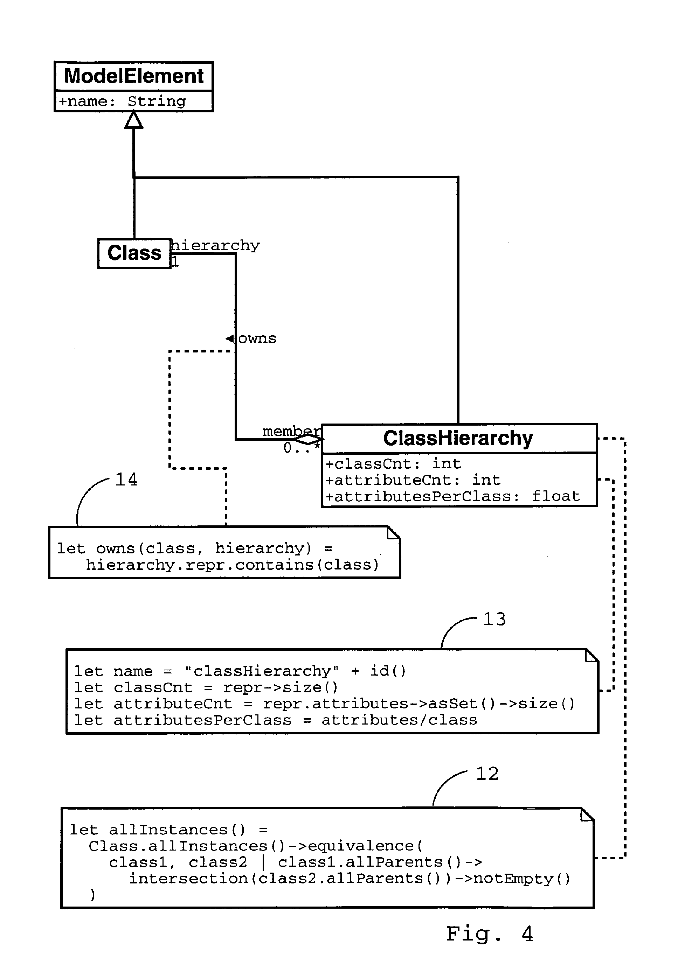

**Fig 4.** gibt den Anblick wieder, den das erfindungsgemäße Gerät oder die erfindungsgemäße Software dem Nutzer nach Durchführung der Verfahrensschritte 4, 6 und 7 (siehe oben Seite 3) bietet. Schritt 5 entfällt in diesem Beispiel, da Eigenschaften nur für Instanzen des neuen Modellelementtypen, nicht aber für den Typen selbst definiert wurden. Berechnungsvorschrift **(12)** definiert die Menge deren Elemente Repräsentanten des neuen Modellelementtypen sind. In dieser und den anderen Berechnungsvorschriften wurde als Sprache zur Formulierung der Berechnungsvorschriften eine an die Object Constraint Language (OCL) angelehnte Sprache gewählt. Die Spezifikation der OCL ist Teil der Spezifikation der UML. Die Erfindung selbst ist unabhängig von der OCL als Sprache zur Formulierung von Berechnungsvorschriften, wie sie auch unabhängig ist von der UML als Modellierungssprache.

Berechnungsvorschrift **(12)** definiert den Wert von ***allInstances ()***, d.h. der Menge aller Instanzen von ***ClassHierarchy*** in einem konkreten Modell. Dieser wird berechnet aufgrund des Wertes von ***Class. allInstances (),*** d.h. der Menge aller Instanzen von ***Class*** in demselben Modell. Die Funktion ***equivalence* (. .)** stellt eine Erweiterung von OCL dar und teilt die Menge, auf die sie angewandt wird, in eine Menge von Äquivalenzklassen auf. Die Äquivalenzrelation gemäß der dies geschieht, ist durch den Ausdruck ***class****1.* ***allparents()->intersection(class2.allParents())->notEmpty* ()** definiert, der besagt, dass zwei Klassen ***class***1 und ***class2*** genau dann äquivalent sind, wenn die Schnittmenge der Mengen ihrer Oberklassen nicht leer sind, d.h. beide zumindest eine gemeinsame Oberklasse haben, also der gleichen Klassenhierarchie angehören. Die Menge aller Instanzen von ***ClassHierarchy*** ist also als Menge von Mengen von Klassen definiert und eine Instanz von ***ClassHierarchy*** wird durch die Menge aller Klassen, die einer Klassenhierarchie angehören, repräsentiert.

Die Berechnungsvorschriften **(13)** geben an, wie die Eigenschaften von Instanzen von ***ClassHierarchy*** zu berechnen sind. Die Eigenschaft ***name*** wird berechnet durch einen konstanten Namensteil als Präfix und einer jedem Modellelement durch das System zugeordneten ID. In der Berechnungsvorschrift für die Eigenschaft ***classCnt*** kommt das Schlüsselwort ***repr*** vor, dass das eine Instanz von ***ClassHierarchy*** gemäß Berechnungsvorschrift (12) repräsentierende Datum vorstellt, hier also die Menge aller Klassen der Hierarchie. Mittels ***size()*** wird die Anzahl der Elemente dieser Menge berechnet, also die Anzahl aller Klassen der Hierarchie. In ähnlicher Weise können die weiteren Eigenschaften ***attributeCnt*** und ***attributesPerClass*** berechnet werden, wobei bei der Berechnung von ***attributesPerclass*** nicht mehr auf das repräsentierende Datum zurückgegriffen werden muss.

Die Berechnungsvorschrift **(14)** gibt an, wann zwei Instanzen von ***Class*** und ***ClassHierarchy*** in der Beziehung ***owns*** stehen. Das ist genau dann der Fall, wenn das die Klassenhierarchie repräsentierende Datum die Klasse enthält. Zusätzlich zur Bestimmung, ob zwei Instanzen von ***Class*** und ***ClassHierarchy*** in der Beziehung ***owns*** stehen, kann die Berechnungsvorschrift **(14)** auch zur Prüfung verwendet werden, ob die bei der Definition der Beziehung **(10)** angegebenen Multiplizitäten gewahrt sind. Dazu ist die Berechnungsvorschrift (14) auf alle Paare von Instanzen ***Class*** und ***ClassHierarchy*** anzuwenden. Die Multiplizitäten können dann auf der dadurch berechneten Menge aller Paare von Instanzen ***Class*** und ***ClassHierarchy,*** für die **(14)** wahr ist, geprüft werden.

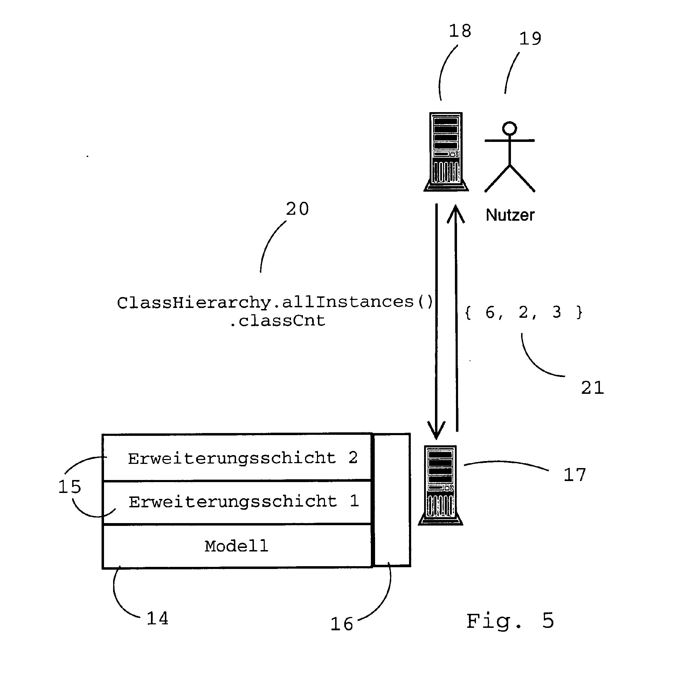

**Fig.5** zeigt die Nutzung eines erweiterten Modells. Ein Computer **(17),** auf dem die erfindungsgemäße Software installiert ist, der also zusammen mit der installierten erfindungsgemäßen Software ein erfindungsgemäßes Gerät bildet, ist mit einem anderen Computer **(18)** verbunden, von dem aus ein Nutzer **(19),** z.B. ein menschlicher Nutzer oder ein anderes Gerät oder eine andere Software aus Anfragen stellen kann. Auf dem erfindungsgemäßen Gerät **(17)** werden unter anderem ein Modell **(14)** und zwei Erweiterungsschichten **(15)** für das Modell **(14)** verwaltet. Durch eine gemeinsame Schnittstelle **(16)** kann auf das durch die Erweiterungsschichten **(15)** erweiterte Modell **(14)** zugegriffen werden. Im betrachteten Beispiel sei das Modell **(14)** durch die in **Fig. 1** dargestellten drei Klassenhierarchien gegeben und eine der Erweiterungsschichten enthalte die in einem Eingabefenster nach **Fig. 4** festgelegte Modellerweiterung. Zudem sei die Verbindung zwischen Nutzer **(19)** und Schnittstelle **(16)** unter Vermittlung der Computer **(17)** und **(18)** bereits hergestellt. Der Nutzer **(19)** ist dadurch in die Lage versetzt an die Schnittstelle **(16)** die Anfrage **(20)** abzusetzen, die nach einer Menge (genauer Multimenge, d.h. mehrfaches Vorkommen des gleichen Elementes ist möglich) fragt, die für jede Instanz von ***ClassHierarchy*** die Anzahl ihrer Klassen enthält. Die Antwort **(21)** des erfindunggemäßen Gerätes bzw. der erfindungsgemäßen Software ist diese Menge, bei den drei Klassenhierarchien von **Fig. 1** also die Menge **{*6, 2, 3*}.**

## Patentansprüche

1. Verfahren zur Erweiterung eines Modelles **(14)** für Software oder Hardware, das Modellelemente, Beziehungen zwischen Modellelementen und Eigenschaften von Modellelementen enthält und Grundlage der manuellen oder automatischen Erstellung und Pflege bzw. Wartung der Software oder Hardware ist, um berechnete Daten, **dadurch gekennzeichnet, dass** zu den berechneten Daten neben neuen, im Modell selbst nicht enthaltenen Eigenschaften **(9)** und Beziehungen **(10)** auch Modellelemente eines neuen, im Modell selbst nicht enthaltenen Typs **(8)** gehören.

2. Verfahren nach Anspruch 1, **dadurch gekennzeichnet, dass** die Erweiterungen in Form von Erweiterungsschichten **(15)** organisiert sind, deren jede eine oder mehrere Erweiterungen enthält und die jeweils unabhängig voneinander auf ein Modell **(14)** angewandt werden können.

3. Verfahren nach Anspruch 1 oder 2, **dadurch gekennzeichnet, dass** dass die Modelle **(14)** Instanzen eines Meta-Modelles sind und Erweiterungen bzw. Erweiterungsschichten **(15)** auf alle Instanzen des Meta-Modelles in gleicher Weise angewandt werden können.

4. Verfahren nach Anspruch 2, **dadurch gekennzeichnet, dass** mehrere Erweiterungsschichten **(15)** gleichzeitig auf ein Modell **(14)** angewandt werden können, wobei jede der Erweiterungsschichten **(15)** einen eindeutigen Namen hat und Namensidentitäten von Erweiterungselementen gleichen Namens in verschiedenen Erweiterungsschichten **(15)** durch Bildung eines qualifizierten Namens bestehend aus dem Namen der Erweiterungsschicht **(15)** und dem Namen des Erweiterungselementes **(8,9,10)** aufgelöst werden können.

5. Verfahren nach Anspruch 3, **dadurch gekennzeichnet, dass** für die Erstellung der Erweiterung des Meta-Modells ein in Software und Hardware oder Hardware alleine realisierter Editor verwendet wird, der dem Nutzer das Meta-Modell in graphischer oder struktureller Form anzeigt und dem Nutzer erlaubt, das Meta-Modell durch Hinzufügen von berechneten Modelleigenschaften **(9)**, berechneten Modellbeziehungen **(10)** und Typen **(8)** berechneter Modellelemente zu erweitern, wobei der Editor alle oder einen Teil der folgenden zusätzlichen Eigenschaften hat:
a) Zusätzlich zu den Eigenschaften, Beziehungen und Modellelementtypen des Meta-Modells werden auch die Erweiterungen **(8,9,10)** des Meta-Modells dem User präsentiert.
b) Zu jeder durch die Erweiterung zum Meta-Modell hinzukommenden Modelleigenschaft **(9)** und Modellbeziehung **(10)** kann vom Nutzer eine Berechnungsvorschrift **(13,14)** angegeben werden, die festlegt, wie sich der Wert der Modelleigenschaft **(9)** oder die durch die Modellbeziehung **(10)** in Beziehung gesetzten Modellelemente aus vom Nutzer beim Modellieren anzugebenden oder anderen berechneten Modelleigenschaften und Modellbeziehungen berechnen.
c) Zu jedem durch die Erweiterung zum Meta-Modell hinzukommenden Typen **(8)** berechneter Modellelemente kann vom Nutzer eine Berechnungsvorschrift **(12)** angegeben werden, die aus den restlichen Daten eines Modelles eine Menge von Daten ableitet, wobei jedes einzelne Datum dieser Menge ein Modellelement des neuen Typs repräsentiert. In den Berechnungsvorschriften **(13,14)** für Eigenschaften **(9)** und Beziehungen **(10)** der berechneten Modellelemente kann auf die die berechneten Modellelemente repräsentierenden Daten zurückgegriffen werden.
d) Einmal hinzugefügte Modelleigenschaften **(9),** Modellbeziehungen **(10)** und Modellelementtypen **(8)** können vom Nutzer auch im Nachhinein modifiziert werden.
e) Einmal hinzugefügte Modelleigenschaften **(9),** Modellbeziehungen **(10)** und Modellelementtypen **(8)** können vom Nutzer auch wieder entfernt werden.
f) Teile **(4,5,6,7)** des Meta-Modells, die auch vor seiner Erweiterung Bestand hatten, können vom Nutzer weder modifiziert noch gelöscht werden.
g) Die Meta-Modell Erweiterung kann unabhängig von dem Meta-Modell gespeichert und auch wieder geladen werden.
h) Der Editor kann prüfen, ob eine gegebene Meta-Modell-Erweiterung auf ein gegebenes Meta-Modell angewandt werden kann, diese also miteinander kompatibel sind oder nicht.

6. Verfahren nach Anspruch 3, **dadurch gekennzeichnet, dass** die Erweiterungen bzw. Erweiterungsschichten **(15)** bereits Teil des Meta-Modells selbst sind, dass also das Meta-Modell zusätzlich zu den bei der Modellerstellung anzugebenden Modelleigenschaften, Modellbeziehungen und Modellelementen abgeleitete (berechnete) Modelleigenschaften **(9),** Modellbeziehungen **(10)** und Modellelementtypen **(8)** vorsieht.

7. Softwaregesteuertes Gerät zur Realisierung des unter 1. genannten Verfahrens, **dadurch gekennzeichnet, dass** eine Komponente zur Erstellung und Bearbeitung von Modellen **(14)** und eine Komponente zur Erstellung von Erweiterungen oder Erweiterungsschichten **(15)** der Modelle mit aus Modelldaten berechenbaren Daten **(8,9,10)** derart zusammenarbeiten, dass die Anwendung einer Erweiterung oder Erweiterungsschicht auf ein Modell **(14)** ein mit berechneten Eigenschaften, Beziehungen und Modellelementen erweitertes Modell ergibt.

8. Softwaregesteuertes Gerät nach Anspruch 7, **dadurch gekennzeichnet, dass** es beim Zugriff auf das erweiterte Modell für den zugreifenden Nutzer **(19),** das zugreifende Gerät oder die zugreifende Software über die gleiche Schnittstelle **(16)** erfolgt, wie er auf das ursprüngliche, nicht erweiterte Modell erfolgen würde.

9. Softwaregesteuertes Gerät nach Anspruch 7, **dadurch gekennzeichnet, dass** die Komponente zur Erstellung und Bearbeitung von Modellen **(14)** dem Nutzer auch die sich aus dem jeweils aktuellen Modell ergebenden berechneten Eigenschaften, Beziehungen und Modellelemente anzeigt.

10. Softwaregesteuertes Gerät nach Anspruch 7, **dadurch gekennzeichnet, dass** die Komponente zur Erstellung und Bearbeitung von Modellen **(14)** nicht Teil des Gerätes ist, sondern die Modelle **(14)** außerhalb des Gerätes erstellt werden und über eine Importschnittstelle eingelesen werden.

11. Softwaregesteuertes Gerät nach Anspruch 7, **dadurch gekennzeichnet, dass** zirkuläre Definitionen der Eigenschaften **(9),** Beziehungen **(10)** und Modellelement-Typen **(8)** erkannt werden.

12. Software zu Realisierung des unter 1 genannten Verfahrens auf einem Computer **(17), dadurch gekennzeichnet, dass** durch Installation der Software auf einem Computer **(17)** lein Gerät nach zumindest einem der Ansprüche 8-11 entsteht.
